# NEW EUROPEAN PATENT SPECIFICATION

(11) **EP 0 936 278 B2**
(45) Date of publication and mention of the opposition decision: **07.07.2010**
(45) Mention of the grant of the patent: 04.08.2004
(21) Application number: 98200490.5
(22) Date of filing: 17.02.1998
(51) Int. Cl.: C22C 21/02, C22C 21/08, C22F 1/05

(54) **Method of producing a product of an ALMGSI-alloy**
Verfahren zur Herstellung eines ALMGSI-Legierungsprodukts
Procédé de fabrication d'un produit en alliage ALMGSI

(43) Date of publication of application: 18.08.1999
(73) Proprietor: Aleris Aluminum Bonn GmbH, 53117 Bonn (DE)
(72) Inventor: Borst, Gerhard, 53347 Alfter (DE); Morianz, Josef, 53844 Troisdorf (DE)
(74) Representative: Müller, Frank Peter

(56) References cited:
- EP-A- 0 676 480
- EP-A- 0 801 139
- EP-A- 0 808 911
- WO-A-97/44501
- DE-A- 4 421 744
- US-A- 4 525 326
- US-A- 5 527 404
- PATENT ABSTRACTS OF JAPAN vol. 017, no. 190 (C-1048), 14 April 1993 -& JP 04 341546 A (SUMITOMO LIGHT METAL IND LTD), 27 November 1992,
- 'Aluminiumschlüssel', vol. 4, 1991, ALUMINIUM-VERLAG, DÜSSELDORF page 201
- 'Aluminium', 1970 article D.ACHENBACH: 'Strangpressen von Aluminium', pages 607 - 613
- 'International Alloy Designations and Chemical Copmposition Limits for Wrought Aluminium and Wrought Aluminium Alloys', 2006, THE ALUMINIUM ASSOCIATION page 8
- 'Aluminium-Schlüssel-Key to Aluminium Alloys', vol. 5, 1997, ALUMINIUM-ZENTRALE, DÜSSELDORF pages 236 - 243

## Description

The invention relates to a method of producing an AlMgSi-alloy suitable for manufacturing components having a high ductility.

Al-Mg-Si type aluminium alloys such as AA6xxx series aluminium alloys are widely used and favoured for their moderately high yield and tensile strength, low quench sensitivity, good corrosion resistance and favourable forming characteristics. AA6xxx series alloys are increasingly attractive to industries such as transportation because of these well-known properties. Further AA6xxx series alloys exhibit in general satisfactory welding characteristics, by which this type of alloy is also widely used for applications resulting in the construction of welded structures. Additional applications for AA6xxx series alloys would be possible when ductility is further increased.

Such an aluminium alloy is known from the international patent application no. WO 97/44501. The known alloy contains the alloying elements, in wt.%:

| | |
|---|---|
| Si | 0.4 - 0.8 |
| Mg | 0.4 - 0.7 |
| Fe | max. 0.30, and preferably 0.18 - 0.25 |
| Cu | max. 0.20, and preferably 0.12 - 0.16 |
| Mn | max. 0.15, and preferably 0.05 - 0.10 |
| V | 0.05 - 0.20 |
| Cr | max. 0.10, and preferably max. 0.01 |
| Ti | max. 0.10 |
| Zn | max. 0.10 |

inevitable impurities and balance aluminium.

An object of the invention is to provide a new method of producing an aluminium alloy suitable for the manufacture of a product made of components having a higher ductility than manufactured from the known aluminium alloy, and further that the aluminium alloy has improved welding properties.

There is provided an aluminium alloy containing the alloying, elements, in wt.%:

| | |
|---|---|
| Si | 0.3 - 1.2 |
| Mg | 0.3 - 1.0 |
| Fe | max. 0.35 |
| Mn | > 0.15 - 0.4 |
| V | 0.05 - 0.20 |
| Cu | max. 0.3 |
| Cr | max. 0.2 |
| Zn | max. 0.2 |
| Ti | max. 0.1 |

and whereby the Mn/Fe ratio is in a range of 0.67 to 1.0 impurities max. 0.05 % each, total max. 0.15 %, balance aluminium.

In this way, it is achieved that the aluminium alloy has good strength, improved ductility, good resistance to corrosion and, in particular in the case of extruded products, exhibits a uniform surface, absence of die pick-up, good longitudinal weld seams, and the possibility to extrude complicated shaped sections which can be both thin and/or thick walled and can be processed at economic extrusion rates. In particular the increased Mn content in the aluminium alloy in accordance with the invention attributes to an improved ductility and a better welding behaviour. Further the aluminium alloy has improved properties after welding and is less sensitive for hot-cracking during welding and after extrusion and heat-treatments has a fine-grained recrystallized microstructure. And further the aluminium alloy has a lower quench-sensitivity than aluminium alloys from the AA6005 A-series type.

In a preferred embodiment the aluminium alloy in accordance with the method of the invention has a Mn content in a range of > 0.15 - 0.30 wt.%. In this range an optimum in mechanical properties and extrudibility is obtained.

The aluminium alloy in accordance with the method of the invention has a Mn/Fe in a range of 0.67 to 1.0.

The Mg content is preferably in a range of 0.5 - 0.7 wt.%, in which range the strength is optimised, in particular when used in combination with a Si content in a range of 0.4 - 0.7 wt.%. A Mg content below 0.3 wt.% does not provide sufficient strength in the component obtained from the alloy of the invention.

In another embodiment of the alloy in accordance with the method of the invention the Si content is in a range of 0.5 - 0.6 wt.% and the Mg content is a range of 0.4 - 0.7 wt.% and more preferably the Mg content is in a range of 0.45 - 0.55 wt.%. In this particular embodiment of the alloy the mechanical properties of the manufactured component are comparable to those made of an AA6106-alloy.

In this type of aluminium alloys V is added to enhance recrystallisation and is present in a range of 0.05 - 0.2 wt.%, and more preferably in a range of 0.05 - 0.15 wt.%. It is mentioned that U.S. Patent 4,525,326 discloses an aluminium alloy for the manufacture of extruded products were the quench sensitivity with respect to strength can be improved by the addition of vanadium. The aluminium alloy contains 0.05 to 0.2 % V, manganese in a concentration equal to ¼ to 2/3 of the iron concentration.

Cu should be not more than 0.3 wt.%. Cu levels above 0.3 wt.% gives rise to unacceptable corrosion resistance of products made of the alloy of the invention.

Cr improves the corrosion resistance of the alloy. However, Cr limits the solubility of Mn and further reduces the extrudibility of the aluminium alloy. Therefor, to avoid formation of coarse primaries and to improve extrusion capability, the Cr content must not be more than 0.2 wt.%, preferably not more than 0.1 wt.%, and more preferably not more than 0.06 wt.%.

Zn is considered to be an impurity element and can be tolerated up to 0.2 wt.%, but is preferably less than 0.1 wt.%.

Ti is important as a grain refiner during solidification of both ingots and welded joints produced using the alloy of the invention. The preferred range for Ti is not more than 0.1 wt.%.

The balance is Al and inevitable impurities. Typically each impurity element is present at 0.05 wt.% maximum and the total of impurities is 0.15 wt.% maximum.

The invention is embodied in a method for manufacturing a product of the aluminium alloy wherein the method comprises the steps of, in succession,
(a) casting the alloy into ingots;
(b) homogenising the cast ingot;
(c) hot-working in the homogenised ingot into a product;
(d) ageing of the product.

In this way, it is achieved that the product acquires excellent properties against a reasonable cost level for the applications which the inventors have in mind.

For casting the aluminium alloy into ingots or extrusion billets both continuous and semi-continuous casting processes can be used. It has surprisingly been found that during semi-continuous Direct Chill (DC)-casting of billets the aluminium alloy is significantly less sensitive for cracking during casting. The reduced crack sensitivity is mainly attributed to the increased Mn content over the known aluminium alloy.

After casting, the aluminium alloy is homogenised. The aim of the homogenising treatment is amongst other things, to homogenise the microstructure, to dissolve the Mg and Si, to level off possible residual stresses resulting from the casting process, and to spheroidize sharp or needle shaped intermetallic compounds formed during solidification of the aluminium alloy. A homogenisation for of 8-30 hours in a temperature in the range of 530 °C to just below the melting temperature of the aluminium alloy is sufficient. A longer homogenisation time is not disadvantageous, but is not required and only serves to raise the costs of production. Preferably, the alloy is homogenised for 8-20 hours in a temperature range of 580 to just below the melting temperature of the aluminium alloy. More preferably, the alloy is homogenised for 8-16 hours in a temperature range of 590-605 °C. It has been found that such a high homogenisation temperature is advanteaous for hot-working the alloy by means of extrusion into complex shaped sections which can be both thin walled or thick walled. In this manner an acceptable extrusion rate can be maintained despite of the relatively high Mn-content. Further due to the relatively high homogenisation treatment the final product has a fine-grained fully recrystallized microstructure.

After homogenisation, the alloy is hot-worked into sheets, rods, profiles or wire or other shaped materials suitable for processing into products. Hot-working includes rolling, forging and hydroforming. The invention is preferably characterised by the ingot or extrusion billet being processed into products via an extrusion process, wherein either direct or indirect extrusion may be used. The ingot temperature during extrusion is preferably in the temperature range of 450-580 °C. Using an extrusion process the aluminium alloy can be processed into e.g. T-shaped profiles with a wall-thickness of up to 20 mm, and multi-hollow-sections with wall-thickness in a range of 1.5 to 4.0 mm.

After hot extrusion, the alloy will be quenched by means of water, or water spray or elevated air. This is also designated by the term "press-quenching".

In another embodiment of the method of the invention the alloy will first cool down after the hot extrusion. The cooling rate is not so important here. Cooling will typically take place in air. Thereafter, the alloy is heat treated by keeping it for 0.5 - 3 hours in a temperature range of 400-565 °C. The aim of this heat treatment, also known as solution heat treatment, is to dissolve, amongst other things, the Si and Mg. This solution heat treatment preferably takes place for 0.5 - 1.5 hours in a temperature range of 400 - 560 °C. Immediately after the solution heat treatment, the alloy is preferably cooled to under 100 °C, preferably by means of quenching in water, in order to minimise uncontrolled precipitation.

In a following step, the material is aged to the desired level of mechanical and physical properties. The ageing step can be performed by means of natural ageing or artificial ageing by 6-30 hours annealing in a temperature range of 130-180 °C. This annealing preferably takes place for 8 - 12 hours in a temperature range of 160 - 180 °C, after which cooling to room temperature takes place via cooling to the air.

After the complete heat treatment cycle, the material can be processed into products of many kinds. The aluminium alloy is preferably suitable for application to components which, amongst other things, require a high capacity for absorbing kinetic energy by plastic deformation, such as components suitable for application in railway vehicles. The aluminium alloy is further suitable to be applied in welded constructions, in particular in vehicle constructions. Further the aluminium alloy is suitable to be applied in hydroformed structures.

The invention is now illustrated by some examples, which do not limit the scope of the invention.

### Examples

Table 1 lists the chemical composition in weight percent of some comparative materials (alloys 1 - 4) and an alloy which falls within the scope of the invention (alloy 5). These alloys were processed by the steps of
(i) DC-casting of 344 mm diameter extrusion billets;
(ii) homogenisation, see Table 2;
(iii) extrusion at 480 °C;
(iv) press-quench;
(v) ageing for 9 hours at 160 °C.

Table 2 lists the homogenisation treatment applied for each alloy. The billets were extruded to the following shapes:
(a) T-shaped profile with a wall-thickness of 20 mm;
(b) Multihollow-section with wall-thickness between 2.5 and 4.0 mm.

All results (microstructures, mechanical properties) on front end, middle, and back end on each investigated extruded products of every type of alloy showed in the extrusion direction, only very small variations and therefore a further differentiation within one variant was not necessary, The following results are in each and every case mean values out of the different parts of the material.

The microstructure in the T-shaped thick walled extrusion product (a) showed in case of alloy 1 a non-recrystallized center and a layer of coarse grains with a diameter of about 1 mm at the surface. Alloy 4 showed a non-recrystallized center, and a layer with a thickness of 3-4 mm of coarse grains near the surface. Alloy 5 showed across the whole cross-section of the product a fully recrystallised microstructure with uniform fine grains. The microstructure of alloy 2 was very similar to the microstructure of alloy 4. The same applied for alloy 3 and alloy 5.

The microstructure in the multihollow profile (b) showed in case of alloy 1 a combination of small and coarse grains and also some non-recrystallized sections. Alloy 4 showed a fully recrystallized microstructure and large differences in the grain size. Alloy 5 showed a fully recrystallized microstructure and a more uniform grain size than with alloy 4. The microstructure of alloy 2 was very similar to the microstructure of alloy 4. The same applied for alloy 3 and alloy 5.

Table 3 lists the results of the testing for mechanical properties, where Rm is the ultimate tensile strength, Rp 0.2 is the 0.2 % yield strength and A is the elongation at fracture (A5 in accordance with German standards)

From Table 3 it can be seen that an increase of the Mn content to above 0.15 % has a significant effect on the ductility of the extruded product. For the T-shaped thick walled extrusions it has to mentioned that the specimens for tensile testing have been taken out of the centre of the profiles (10 mm diameter specimens) and therefore show in the case of alloy 1,2 and 4 an increase in the tensile properties due to the non-recrystallized parts present in the centre. It has to be considered however, that the mechanical values show significant differences in thickness direction across the shape. The values in the center part - as presented in table - are quite high for alloys 1, 2 and 4. This is due to the positive effect of testing the not recristallized zones. The properties close to the surface in the recistallized parts are considerably lower in these cases. Alloys 3 and 5 as fully recistallized extrusions are showing the most consistent behaviour.

Table 4 lists the mechanical properties of the extruded profiles after welding using a fully automatic MIG-device and AlMg4.5MnZr filler wire with a thickness of 1.6 mm. The T-shaped profiles (a) have 6 layers and the weld bead overfill was removed prior to testing. The multi-hollow profiles (b) have 1 layer (at wall thickness of 4 mm) and the weld bead was not removed prior the testing. In all cases the cracks during tensile testing were observed in the heat-effected zone.

The weldments were showing the normal behaviour concerning the formation of grain boundary openings. The amount and size of grain boundary openings are strongly dependent on the grain size of the parent material. Alloy 5 as the variant with the smaller and most uniform grain size showed the best properties, followed by alloy 4. Alloy 1 - namely in the case of the multi-hollow section - exhibited a significantly tendency for the formation of grain boundary openings.

**Table 1**

| Alloy | Invention | Si | Fe | Cu | Mn | Mg | Cr | Zn | V | Ti | Mn/Fe |
|---|---|---|---|---|---|---|---|---|---|---|---|
| 1 | out | 0.63 | 0.24 | 0.09 | 0.10 | 0.64 | 0.05 | 0.06 | - | < 0.1 | 0.41 |
| 2 | out | 0.58 | 0.23 | 0.13 | 0.02 | 0.58 | 0.05 | 0.04 | 0.09 | < 0.1 | 0.08 |
| 3 | out | 0.58 | 0.23 | 0.13 | 0.02 | 0.58 | 0.05 | 0.04 | 0.09 | < 0.1 | 0.08 |
| 4 | out | 0.58 | 0.23 | 0.13 | 0.18 | 0.57 | 0.05 | 0.04 | 0.09 | < 0.1 | 0.78 |
| 5 | in | 0.58 | 0.23 | 0.13 | 0.18 | 0.57 | 0.05 | 0.04 | 0.09 | < 0.1 | 0.78 |

**Table 2**

| Alloy | Homogenisation |
|---|---|
| 1 | 10 hours at 565 °C |
| 2 | 10 hours at 565 °C |
| 3 | 10 hours at 600 °C |
| 4 | 10 hours at 565 °C. |
| 5 | 10 hours at 600 °C |

**Table 3**

| Alloy | T-shaped section | | | Multi-hollow section | | |
|---|---|---|---|---|---|---|
| | Rm [MPa] | Rp 0.2 [MPa] | A [%] | Rm [MPa] | Rp 0.2 [MPa] | A [%] |
| 1 | 335 | 302 | 17 | 277 | 251 | 7 |
| 2 | 329 | 296 | 17 | 284 | 247 | 10 |
| 3 | 289 | 256 | 18 | 287 | 250 | 10 |
| 4 | 322 | 287 | 17 | 280 | 243 | 11 |
| 5 | 278 | 244 | 19 | 279 | 241 | 11 |

**Table 4**

| Alloy | T-shaped section | | | Multi-hollow section | | |
|---|---|---|---|---|---|---|
| | Rm [MPa] | Rp 0.2 [MPa] | A [%] | Rm [MPa] | Rp 0.2 [MPa] | A [%] |
| 1 | 228 | 162 | 4.5 | 164 | 130 | 3.5 |
| 4 | 215 | 153 | 4.0 | 168 | 129 | 3.9 |
| 5 | 211 | 150 | 5.1 | 201 | 142 | 4.5 |

## Claims

1. Method of producing a product of an AlMgSi-alloy suitable for manufacturing components having a high ductility,
wherein the alloy contains, in wt.%:
| | |
|---|---|
| Mg | 0.3 - 1.0 |
| Si | 0.3 - 1.2 |
| Fe | max. 0.35 |
| Mn | > 0.15 - 0.4 |
| V | 0.05 - 0.20 |
| Cu | max. 0.3 |
| Cr | max. 0.2 |
| Zn | max. 0.2 |
| Ti | max. 0.1 |
and whereby the Mn/Fe ratio is in a range of 0.67 to 1.0, impurities max. 0.05 % each, total max. 0.15 %, balance aluminium, wherein the method comprises the steps of:
(a) casting the alloy into ingots;
(b) homogenising the cast ingot;
(c) hot-working the homogenised ingot into a product;
(d) ageing of the product, and wherein
the step of homogenising comprises holding the cast ingot for 8-20 hours in a temperature range of 580 °C to just below melting temperature of the alloy.

2. Method in accordance with claim 1, **characterised in that** hot-working comprises extrusion.

3. Method in accordance with claim 1 or 2, **characterised in that** homogenising comprises holding the cast ingot for 8-16 hours in a temperature range of 590-605 °C.

4. Use of a component made from the AlMgSi-alloy obtained from the method in accordance with any one of claims 1 to 3 in a railway vehicle.

5. Welded structure comprising at least one welded plate or extrusion made of aluminium-magnesium-silicon alloy obtained from the method according to any one of claims 1 to 3.

6. Hydroformed structure comprising a component made from the AlMgSi-alloy obtained from the method in accordance with any one of claims 1 to 3.

## Patentansprüche

1. Verfahren zur Herstellung eines Produkts aus einer Al-Mg-Si-Legierung, die zur Herstellung von Bauteilen mit hoher Duktilität geeignet ist, wobei die Legierung in Gew.-% folgendes enthält:
| | |
|---|---|
| Mg | 0,3 - 1,0 |
| Si | 0,3 - 1,2 |
| Fe | max. 0,35 |
| Mn | > 0,15 - 0,4 |
| V | 0,05 - 0,20 |
| Cu | max. 0,3 |
| Cr | max. 0,2 |
| Zn | max. 0,2 |
| Ti | max. 0,1, |
und wobei das Verhältnis Mn/Fe in einem Bereich von 0,67 bis 1,0 liegt,
Verunreinigungen jeweils max. 0,05 %, gesamt max. 0,15 %, Rest Aluminium, wobei das Verfahren folgende Schritte umfasst:
(a) die Legierung wird zu Barren gegossen;
(b) der gegossene Barren wird homogenisiert;
(c) der homogenisierte Barren wird zu einem Produkt warmbearbeitet;
(d) das Produkt wird gealtert, und
wobei das Homogenisieren umfasst, dass der gegossene Barren für 8 - 20 Stunden in einem Temperaturbereich von 580°C bis knapp unter der Schmelztemperatur der Legierung gehalten wird.

2. Verfahren nach Anspruch 1, **dadurch gekennzeichnet, dass** die Warmbearbeitung Strangpressen umfasst.

3. Verfahren nach Anspruch 1 oder 2, **dadurch gekennzeichnet, dass** das Homogenisieren umfasst, dass der gegossene Barren für 8 - 16 Stunden in einem Temperaturbereich von 590 - 605°C gehalten wird.

4. Verwendung eines Bauteils, das aus einer Al-Mg-Si-Legierung hergestellt wurde, das nach dem Verfahren nach einem der Ansprüche 1 bis 3 erhalten wurde, in einem Eisenbahnfahrzeug.

5. Geschweißte Struktur, die wenigstens eine geschweißte Platte oder ein Strangpressprofil aus einer Al-Mg-Si-Legierung aufweist, die durch ein Verfahren nach einem der Ansprüche 1 bis 3 hergestellt wurde.

6. Hydrogeformte Struktur, die ein Bauteil aufweist, das aus einer Al-Mg-Si-Legierung hergestellt wurde, die durch ein Verfahren nach einem der Ansprüche 1 bis 3 erhalten wurde.

## Revendications

1. Procédé de fabrication d'un article en alliage AlMgSi convenant pour fabriquer des pièces à grande ductilité, l'alliage contenant, en pourcentage de poids:
| | |
|---|---|
| Si | 0,3 - 1,2 |
| Mg | 0,3- 1,0 |
| Fe | maxi 0,35 |
| Mn | > 0,15 - 0,4 |
| V | 0,05 - 0,20 |
| Cu | maxi 0,3 |
| Cr | maxi 0,2 |
| Zn | maxi 0,2 |
| Ti | maxi 0,1 |
et du fait de quoi le rapport Mn/Fe est compris entre 0,67 et 1,0 impuretés, maxi 0,05% chacune, maxi total 0,15%, le reste étant constitué d'aluminium, le procédé comprenant les étapes consistant à :
(a) couler l'alliage en lingots ;
(b) homogénéiser le lingot coulé ;
(c) transformer à chaud le lingot homogénéisé pour obtenir un article ;
(d) faire vieillir l'article, et
cependant l'homogénéisation consiste à maintenir le lingot coulé pendant 8 à 20 heures à une température comprise entre 580°C et une valeur à peine inférieure à la température de fusion de l'alliage.

2. Procédé selon la revendication 1, **caractérisé en ce que** la transformation à chaud comporte une extrusion.

3. Procédé selon la revendication 1 ou 2, **caractérisé en ce que** l'homogénéisation consiste à maintenir le lingot coulé pendant 8 à 16 heures à température de 590 à 605°C.

4. Utilisation, dans un véhicule ferroviaire, d'une pièce en alliage AlMgSi obtenue à l'aide du procédé selon l'une quelconque des revendications 1 à 3.

5. Structure soudée comprenant au moins une tôle ou un extrudé soudé en alliage aluminium-magnésium-silicium obtenue à l'aide du procédé selon l'une quelconque des revendications 1 à 3.

6. Structure hydroformée comprenant une pièce entre alliage AlMgSi obtenue à l'aide du procédé selon l'une quelconque des revendications 1 à 3.
